# EUROPEAN PATENT SPECIFICATION

(11) **EP 2 048 123 B1**
(45) Date of publication and mention of the grant of the patent: **27.05.2015**
(21) Application number: 06782405.2
(22) Date of filing: 01.08.2006
(51) Int. Cl.: C04B 24/10, C04B 24/26, C04B 28/02, C04B 103/30

(54) **USE OF CEMENT ADMIXTURE AND CEMENT COMPOSITION MAKING USE OF THE ADMIXTURE**
VERWENDUNG EINES ZEMENTZUSATZMITTELS UND ZEMENTZUSAMMENSETZUNG, DIE DIESES ZUSATZMITTEL VERWENDET
UTILISATION D'ADDITIF DE CIMENT ET COMPOSITION DE CIMENT FAISANT USAGE DE CELUI-CI

(43) Date of publication of application: 15.04.2009
(73) Proprietor: Denki Kagaku Kogyo Kabushiki Kaisha, Tokyo 103-8338 (JP)
(72) Inventor: WATANABE, Yoshiharu, Itoigawa-shi, Niigata 949-0393 (JP); AIZAWA, Kazuhiro, Itoigawa-shi, Niigata 949-0393 (JP)
(74) Representative: Vossius & Partner Patentanwälte Rechtsanwälte mbB
(86) International application number: PCT/JP2006/315561
(87) International publication number: WO 2008/015767

(56) References cited:
- WO-A1-98/54108
- JP-A- 2001 064 058
- JP-A- 2002 029 808
- JP-A- 2002 104 852
- JP-A- 2002 104 853
- JP-A- 2003 286 060
- US-A- 4 119 597
- US-A- 5 716 448
- DATABASE WPI Week 200539 Thomson Scientific, London, GB; AN 2005-376729 XP000002658841, & JP 2005 126506 A (TACHIBANA MATERIAL KK) 19 May 2005 (2005-05-19) -& JP 2005 126506 A (TACHIBANA MATERIAL CO LTD) 19 May 2005 (2005-05-19)
- CHEMICAL ABSTRACTS, vol. 104, no. 4, 27 January 1986 (1986-01-27), Columbus, Ohio, US; abstract no.: 23400k, XP183798 & KIM, BAE YEON ET AL: "Effect of micro organic-inorganic complex on hydration of portland cement (I). Formation of interlamella complex between montmorillonite and PVA [poly(vinyl alcohol)¨]", YOOP HAKHOECHI, vol. 22, no. 4, 1 January 1985 (1985-01-01), pages 21-25,

## Description

### TECHNICAL FIELD

The present invention relates to a the use of a composition as cement admixture for concrete that improves slump loss without material separation such as bleeding even at a zone little in unit cement quantity and uses a polycarboxylate salt water reducing agent having trade-off good workability that when slump is about 23 cm or less, it is not fluidized and it is fluidized at more than 23 cm to have self packing property; and a cement composition using thereof. It is those used for general civil engineering and construction structures, concrete secondary products and the like.

Further, the concrete of the present invention names generically cement paste, mortar and concrete.

### BACKGROUND OF THE INVENTION

A polycarboxylate based water reducing agent has been conventionally differentiated from general water reducing agents such as other lignin sulfonate salt water reducing agent and high performance water reducing agents such as melamine resin sulfonate salt. The polycarboxylate based water reducing agent exhibits high water reducing rate similar as the high performance water reducing agent, but it is different points that it has air-entraining property and is a water reducing agent that reduces the flow lowering of mortar or concrete and slump loss.

The polycarboxylate based water reducing agent is often used for high-flow concrete, concrete using the polycarboxylate based water reducing agent becomes concrete with strong stickiness and self flowability and construction at incline generates dragging; therefore it has had a problem that construction property is bad.

When the use amount of the polycarboxylate based water reducing agent is increased and the unit quantity of water is designed to be reduced for obtaining high strength with a small amount of cement, it has had problems that the viscosity of paste is abnormally lowered to provoke material separation and to generate breeding and concrete in which paste and mortar are separated from aggregate is obtained.

Further, it is not so extreme like this, but when a polyalkylallyl sulfonate-based high performance water reducing agent is used, the unit quantity of cement is lessened and the addition amount of the high performance water reducing agent is increased; therefore it has had similar problems that the material separation tends to occur and simultaneously stickiness is strengthened.

When the high performance water reducing agent is used, it has been already proposed that bentonite is compounded for reducing the stickiness and preventing the dragging at construction on incline (refer to the patent literature 1).

However, when bentonite is added in the concrete using the polycarboxylate based water reducing agent to be kneaded with a mixer, flowable concrete is obtained at the beginning of kneading but when the kneading is continued, abrupt slump drop is generated to be in a state in which there is no flowability; therefore there has been a problem that when slump is constant, the unit quantity of water is abnormally increased.

On the other hand, it is known that polyvinyl alcohol exhibits effect for improving the slump loss of the high performance water reducing agent (refer to the patent literature 2).

However, when the polycarboxylate based water reducing agent and bentonite are used in combination, it is not known that the polyvinyl alcohol improves the abrupt slump drop generated during kneading and whether it has effect of reducing slump loss thereafter or not.

On the other hand, it is also known already that saccharides exhibit also effect for reducing the slump loss of the high performance water reducing agent (refer to the patent literature 3).

However, saccharides do not exhibit effect for abrupt slump drop at using the polycarboxylate based water reducing agent and bentonite in combination at all.
Patent literature 1: JP-A-7-277795
Patent literature 2: JP-A-2002-104853
Patent literature 3: JP-A-57-047754

### DISCLOSURE OF THE INVENTION

### PROBLEMS TO BE SOLVED BY THE INVENTION

The present inventors have extensively studied methods for solving problems that the polycarboxylate based water reducing agent has, and as a result, have found that mortar or concrete exhibiting self flowability and being little in the lowering of mortar flow and the slump loss of concrete is obtained by setting the slump at more than about 23 cm by the adjustment of the amount of the polycarboxylate based water reducing agent by using bentonite and a small amount of polyvinyl alcohol and by using these together with a small amount of saccharides in concrete using the polycarboxylate based water reducing agent, while having nature of no dragging and no material separation, to complete the present invention.

### MEANS FOR SOLVING PROBLEMS

The present invention relates to the following embodiments:
1. Use of a composition comprising bentonites and polyvinyl alcohol, wherein the polyvinyl alcohol has an average degree of polymerization of 1700 or less and a degree of saponification equal to or less than 95% by mol, as a cement admixture for concrete comprising a polycarboxylate based water reducing agent; wherein the polycarboxylate based water reducing agent is present in an amount of 0.3 to 5 parts, the bentonites are present in an amount of 0.1 to 10 parts and the polyvinyl alcohol is present in an amount of 0.03 to 1 part based on 100 parts of the cement.
2. The use according to item 1, wherein the bentonites are one or more selected from a group consisting of bentonite, acidic white clay and active white clay.
3. The use according to item 1 or 2, wherein the cement admixture further comprises saccharides.
4. A cement composition comprising cement, a polycarboxylate based water reducing agent, bentonites and polyvinyl alcohol, wherein the polyvinyl alcohol has an average degree of polymerization of 1700 or less and a degree of saponification equal to or less than 95% by mol; and
   the polycarboxylate based water reducing agent is present in an amount of 0.3 to 5 parts, the bentonites are present in an amount of 0.1 to 10 parts and the polyvinyl alcohol is present in an amount of 0.03 to 1 part based on 100 parts of the cement.
5. The cement composition according to item 4, wherein the bentonites are one or more selected from a group consisting of bentonite, acidic white clay and active white clay.
6. The cement composition according to item 4 or 5, further comprising saccharides.
7. The cement composition according to item 6, wherein the saccharides are present in an amount of 0.01 to 0.2 parts based on 100 parts of the cement.

Parts and % in the present invention are mass basis unless otherwise noticed.

### EFFECT OF THE INVENTION

When bentonites and PVA are used in combination, or the bentonites, PVA and saccharides are used in combination, the material separation of concrete using the polycarboxylate based water reducing agent and dragging and the like caused by strong stickiness are prevented, and there are exhibited effects that (1) light concrete (force is unnecessary for slashing back the concrete) having no material separation, little slump loss and good workability can be produced, (2) when slump is about 23 cm or less, the slump becomes independent and dragging is not observed, and when it is at more than 23 cm, self flowable concrete can be produced, (3) when a high strength cement admixture is used in combination, higher strength is obtained by the less unit quantity of cement, and the like.

### BEST MODE FOR CARRYING OUT THE INVENTION

The present invention is specifically explained below.

The polycarboxylate based water reducing agent (hereinafter, called as the polycar-based water reducing agent) used in the present invention is usually a polymer or a copolymer containing unsaturated carboxylic acid monomer as one component, or salts thereof.

For example, the unsaturated carboxylic acid monomer includes polyalkylene glycol mono-acrylate, polyalkylene glycol mono-methacrylate, maleic anhydride, acrylic acid and methacrylic acid, and the salts of acrylic acid and methacrylic acid and the like.

Further, the polycarboxylate based water reducing agent is not specifically limited so far as it is a polycarboxylate based water reducing agent that is introduced from a monomer capable of polymerizing or copolymerizing with these unsaturated carboxylic acid monomers, but as one example, a copolymer of these unsaturated carboxylic acid monomers with styrene, and the like can be mentioned. There are commercially sold Trade name "RHEOBUILD SP8" series manufactured by NMB Co., Ltd., Trade name "FLOWRIC SF500" series manufactured by Flowric Co., Ltd., Trade name "CHUPOL HP 8 and 11" manufactured by Takemoto Oil & Fat Co., Ltd., Trade name "DARLEXSUPER 100, 200, 300 and 1000" series manufactured by Grace Chemicals Co., Ltd. and Trade name "MIGHTY 21WH" and "MIGHTY 3000" series manufactured by KAO Corporation and they are usually liquid.

The use amount of the polycarboxylate based water reducing agent is present in an amount of 0.3 to 5 parts based on 100 parts of cement and preferably 0.5 to 4 parts. When the amount is less than 0.3 parts, the abrupt slump loss at using bentonite in combination and the slump loss thereafter can occasionally not be improved even if an appropriate amount of polyvinyl alcohol is compounded, and when the amount exceeds 5 parts, water reducing rate occasionally hits a peak and curing is occasionally bad.

The bentonites used in the present invention are preferably one or more selected from a group comprising bentonite, acidic white clay and active white clay and the material separation of concrete using the polycarboxylate based water reducing agent is suppressed, to obtain light and easily handled concrete imparting plasticity and having no dragging.

Further, when the slump is set at equal to or more than 23 cm by the adjustment of the unit quantity of water and the polycarboxylate based water reducing agent, self flowability is exhibited.

The main mineral of bentonite is montmorillonite and a greater potion is clay mineral which was prepared by the decomposition of glass component of volcanic ash. It has a lamellar crystal structure and has nature that takes in cation and water between it lattice to be swollen.

Further, bentonite can be also synthesized, and in the present invention, either of a natural product or a synthesis product and bentonite can be used irrespective of the level of the degree of swelling.

Acidic white clay is clay mineral in which the glass component of volcanic ash is further decomposed to be not swollen and exhibits acidity. It is characteristic that its specific surface is large.

Active white clay is obtained by treating the acidic white clay with mineral acid to dissolve aluminum component and enlarging its specific surface more largely to enhance activity.

In the present invention, one or more of bentonites are used and the use amount of the bentonites is 0.1 to 10 parts by one or the total amount of 2 or more based on 100 parts of cement. The preferable amount of single use is 0.1 to 3 parts for bentonite, 2 to 10 parts for acidic white clay and 1 to 6 parts for active white clay. When 2 or more are used in combination, the amount is preferably controlled within the range of the use amount when each of them is singly used.

A small amount of bentonites exhibits effect, but when it is less than 0.1 parts, the effect that reduces the material separation of the polycarboxylate based water reducing agent is little even if bentonites having intensive water retentivity are used. When it exceeds 10 parts, the unit quantity of water is abruptly increased at the same slump and it is not preferable in strength even if the acidic white clay which has less effect that reinforces the water retentivity than bentonite is used.

The polyvinyl alcohol (hereinafter, called as PVA) used in the present invention has the effect that prevents the abrupt slump drop of concrete during kneading when the bentonites and the polycarboxylate based water reducing agent are used in combination and also prevents the slump loss thereafter.

The average degree of polymerization of PVA in the present invention is 1700 or less and the smaller the better. When the average degree of polymerization of PVA exceeds 2000, the prevention effect of slump loss is occasionally little.

In the present invention, a partially saponified polyvinyl alcohol in which the degree of saponification is equal to or less than 95% by mol is used. When the degree of saponification exceeds 95% by mol, the improvement of the abrupt slump drop during kneading is occasionally difficult unless the average degree of polymerization is small. Even if the degree of saponification is less than 95% by mol, the improvement effect of the abrupt slump drop or effect that reduces the slump loss thereafter is occasionally lessened when the average degree of polymerization exceeds 2000.

The average degree of polymerization of a commercially available partially saponified polyvinyl alcohol is about 400 to about 500 at lower side and these are preferably used.

The compounding amount of PVA is 0.03 to 1 part based on 100 parts of cement and preferably 0.05 to 0.7 parts. When it is less than 0.03 part, the improvement effect of the slump loss is little even if the compounding amount of bentonites is little and when it is compounded exceeding 1 part, the lowering of strength is occasionally enlarged.

Saccharides used in the present invention indicate oligosaccharide such as disaccharide or trisaccharide. Specifically, sucrose, raffinose and the like are mentioned. The single use of these saccharides has no effect that reduces the abrupt slump drop at using the polycarboxylate based water reducing agent and bentonites in combination and no effect that reduces the slump loss thereafter, but promotes the reduction effect of the slump loss after kneading concrete that uses the polycarboxylate based water reducing agent, bentonites and PVA in combination.

The use amount of the saccharides is preferably 0.01 to 0.2 parts based on 100 parts of cement and more preferably 0.02 to 0.15 parts. When it is less than 0.01 parts, the effect that promotes the slump loss is little and when it is compounded exceeding 0.2 parts, the lowering of strength is occasionally enlarged.

In the present invention, it is preferable for obtaining high strength and for enhancing the resistance of material separation and self flowability that components such as gypsums and/or active silica and metakaolinite expressing high strength, or a high strength admixture containing these are used in combination, and even if these are used in combination, the reduction effect of the slump loss of the present invention is not changed.

Further, it is preferable that fly ash is suitably used in combination as a component for promoting the resistance of material separation and self flowability.

Here, as the gypsums, gypsum dihydrate, gypsum half hydrate, II type anhydrous gypsum and III type anhydrous gypsum can be used, but in particular, gypsum dihydrate, gypsum half hydrate and II type anhydrous gypsum are preferable because the promotion effect of strength is large.

The II type anhydrous gypsum includes natural gypsum, fluoric acid gypsum which is prepared as a by-product at generation of fluoric acid and gypsum that is obtained by thermally treating gypsum with other aspect at 350°C or more and the degree of fineness is not specifically limited so far as it is equal to cement or more.

The compounding amount of the gypsums is preferably 10 parts or less converted to anhydride based on 100 parts of cement, more preferably 1 to 8 parts and most preferably 2 to 6 parts. Even if it is compounded exceeding 10 parts, the promotion effect of strength hits a peak.

The active silica is silica fume generated when metal silicon and silicon alloy are produced by an electric furnace, the calcined ask of silicified wood of rice plant, thatch, bamboo reed and the like, and artificial aerosil, and either is ultra fine powders in which amorphous SiO₂ is a main component.

The compounding amount of the active silica is preferably 25 parts or less based on 100 parts of cement, more preferably 20 parts or less and most preferably 2 to 15 parts. Even if it is compounded exceeding 25 parts, the promotion effect of strength hits a peak.

Metakaolinite is obtained by thermally treating kaolinite mineral at about 600°C and dehydrating water that is bonded in crystal lattice in the form of OH, is amorphous alumino silicate by X-ray and has pozzolanic activity.

The compounding amount of metakaolinite is preferably 15 parts or less based on 100 parts of cement, more preferably 12 parts or less and most preferably 2 to 10 parts. When it is compounded exceeding 15 parts, the promotion effect of strength hits a peak.

The cement used in the present invention includes various Portland cements, mix cements and eco cement such as normal cement, early-strength cement, ultra early-strength cement, moderate heat cement, white cement, low heat cement (belite) and sulfate resistant cement.

The mixing method of respective materials in the present invention is not specifically limited and respective components can be separately kneaded or can be kneaded by being charged in a mixer together with other materials.

When the polycarboxylate based water reducing agent is used, components other than the polycarboxylate based water reducing agent are preliminarily compounded in a cement admixture and a cement composition and the polycarboxylate based water reducing agent, the cement admixture and the cement composition can be kneaded by separately being charged in a mixer, or together with other materials.

The curing method of a concrete structure and a concrete product using the cement admixture of the present invention is not specifically limited and usual curing, vapor curing and autoclave curing can be carried out.

The present invention is specifically explained according to Examples, but the present invention is not limited to these.

### Example 1

Using a concrete compounding having a unit cement amount of 350 kg/m³, a unit fine aggregate amount of 920 kg/m³, a unit coarse aggregate amount of 930 kg/m³, a unit water amount of 145 kg/m³, a unit amount of the polycarboxylate based water reducing agent of 7.0 kg/m³ (2.0 parts based on 100 parts of cement) and an air quantity of 4.5 ± 1.0%, 10 liters of concrete was kneaded for 5 minutes with an omni mixer using bentonites and PVA shown in Table 1, and the aging change of slump at 28°C in a stationary state and the compression strength with a material age of 28 days cured in standard were measured. The result is described in Table 1.

### Materials used

Cement: Normal Portland cement manufactured by Denki Kagaku Kogyo K. K.
Fine aggregate: Sand produced in Himekawa, Niigata Prefecture, Japan (5 mm or less).
Coarse aggregate: Crushed stone produced in Himekawa, Niigata Prefecture, Japan (25 to 5 mm).
Polycarboxylate based water reducing agent A: Trade name DARLEXSUPER 100PHX" series manufactured by Grace Chemicals Co., Ltd., commodity product, liquid.
Bentonites a: manufactured by HOJUN Co., Ltd. The degree of swelling: 24.
Bentonites b: Acidic white clay manufactured by Nihon Katsusei Hakudo K.,K.
Bentonites c: Active white clay manufactured by Nihon Katsusei Hakudo K.,K.
PVA b: Partially saponified polyvinyl alcohol with the degree of polymerization of 500 and the degree of saponification of 86.5 to 89.5% by mol.

### Measurement method

Aging change of slump: Slump was measured according to JIS A 1101. The aging change of slump was carried out by setting concrete at a stationary state and repeatedly measuring at every measurement time.

Compression strength: A frame of φ 10 x 20 cm was molded according to JIS A 1132 and the compression strength with a material age of 28 days cured in standard was measured.

**Table 1**

| Experimental No. | Bentonites | PVA | Aging change of slump (cm) | | | | Compression strength (N/mm²) | Remarks |
|---|---|---|---|---|---|---|---|---|
| | | | Just after | 30 min | 60 min | 120 min | | |
| 1-1 | - 0.0 | - 0 | 22.0 | 2.8 | - | - | 61.4 | Comparative Example |
| 1-2 | a 1.5 | - 0 | 3.8 | 1.0 | - | - | 68.0 | Comparative Example |
| 1-3 | b 5.0 | - 0 | 5.0 | 2.1 | - | - | 67.1 | Comparative Example |
| 1-4 | c 4.0 | - 0 | 4.3 | 2.0 | - | - | 67.8 | Comparative Example |
| 1-5 | a 0.1 | b 0.2 | 22.2 | 15.2 | 5.1 | - | 63.8 | Example |
| 1-6 | a 0.2 | b 0.2 | 22.0 | 18.6 | 6.2 | - | 65.3 | Example |
| 1-7 | a 0.5 | b 0.2 | 21.2 | 18.2 | 10.1 | 2.5 | 63.8 | Example |
| 1-8 | a 1.0 | b 0.2 | 20.2 | 18.4 | 16.5 | 4.8 | 68.9 | Example |
| 1-9 | a 1.5 | b 0.2 | 18.4 | 18.3 | 16.2 | 6.0 | 71.7 | Example |
| 1-10 | a 2.0 | b 0.2 | 16.3 | 16.0 | 14.8 | 2.0 | 72.5 | Example |
| 1-11 | a 3.0 | b 0.2 | 4.3 | 3.5 | 1.2 | - | 72.4 | Example |
| 1-12 | b 2.0 | b 0.2 | 21.6 | 16.0 | 6.0 | 2.1 | 64.2 | Example |
| 1-13 | b 5.0 | b 0.2 | 18.2 | 18.3 | 16.6 | 6.4 | 71.7 | Example |
| 1-14 | b 8.0 | b 0.2 | 10.0 | 8.4 | 6.2 | 2.3 | 72.0 | Example |
| 1-15 | b 10.0 | b 0.2 | 4.8 | 4.2 | 1.5 | - | 72.1 | Example |
| 1-16 | c 1.0 | b 0.2 | 20.7 | 15.8 | 5.4 | 1.8 | 65.8 | Example |
| 1-18 | c 4.0 | b 0.2 | 16.9 | 17.0 | 14.2 | 4.2 | 72.4 | Example |
| 1-19 | c 6.0 | b 0.2 | 9.3 | 6.2 | 4.3 | - | 72.6 | Example |

| | | | | | | | | |
|---|---|---|---|---|---|---|---|---|
| Bentonites and PVA are (parts) based on 100 parts of cement. The aging change of slump/ Experimental No.1-1 just after kneading generated material separation and bleeding. Experimental No.1-5 does not generate bleeding but has a streak of separation. | | | | | | | | |

In Table 1, when the unit cement amount is little, mortar portion is fluidized and the slump collapses when the polycarboxylate based water reducing agent is increased and the unit water amount is squeezed, and the material separation that bleeding is generated and the like is generated (Experimental No.1-1).

Further, when only bentonites are added, a flowable state at initial kneading produces abrupt slump loss when kneading is continued, and the slump loss thereafter is also promoted. (Experimental No.1-2 to No.1-4)

When the addition amount of PVA is constant and the addition amount of bentonites is changed, the mortar has a slight streak of separation at 0.1 parts, but bleeding is stopped and slump tends to be retained for about 30 minutes. When the addition amount of bentonites is increased in order, the material separation is extinguished and light and plastic concrete is prepared and simultaneously, the retention time of the slump is elongated. When the addition amount of bentonites is too much, the water keeping property of bentonites is large; therefore the slump is inversely lessened and the slump loss is also promoted. Accordingly, the addition amount of bentonites is 0.1 to 10 parts. Among the bentonites, the more preferable addition amount of bentonite a is 0.2 to 3.0 parts and when it exceeds 3.0 parts, the slump is more lessened and when the slump is set as the same, the unit water amount is increased and strength lowering is suggested. It is shown that when the bentonites are acidic white clay b, the more preferable compounding amount is 2.0 to 8.0 parts and when it is active white clay c, it is 1.0 to 6.0 parts (Experimental No.1-3 to No.1-19).

### Example 2

Using the concrete compounding of Example 1, operation was carried out in like manner as Example 1 except that bentonites and PVA shown in Table 2 based on 100 parts of cement were used. The result is described in Table 2.

### Materials used

PVA a: Partially saponified polyvinyl alcohol with the degree of polymerization of 400 and the degree of saponification of 87.5 to 90.5% by mol.
PVA c: Partially saponified polyvinyl alcohol with the degree of polymerization of 800 and the degree of saponification of 85 to 88% by mol.
PVA d: Partially saponified polyvinyl alcohol with the degree of polymerization of 1000 and the degree of saponification of 88 to 91% by mol.
PVA e: Partially saponified polyvinyl alcohol with the degree of polymerization of 1700 and the degree of saponification of 87 to 89% by mol.
PVA f: Partially saponified polyvinyl alcohol with the degree of polymerization of 2000 and the degree of saponification of 87 to 89% by mol.
PVA g: Partially saponified polyvinyl alcohol with the degree of polymerization of 2400 and the degree of saponification of 87 to 89% by mol.
PVA h: Perfectly saponified polyvinyl alcohol with the degree of polymerization of 500 and the degree of saponification of 98 to 99% by mol.

**Table 2**

| Experimental No. | Bentonites | PVA | Aging change of slump (cm) | | | | Compression strength (N/mm²) | Remarks |
|---|---|---|---|---|---|---|---|---|
| | | | Just after | 30 min | 60 min | 120 min | | |
| 2-1 | a 1.5 | a 0.2 | 18.2 | 19.3 | 17.2 | 8.0 | 72.4 | Example |
| 1-9 | a 1.5 | b 0.2 | 18.4 | 18.3 | 16.2 | 6.0 | 71.7 | Example |
| 2-2 | a 1.5 | c 0.2 | 17.2 | 17.0 | 16.3 | 5.3 | 70.3 | Example |
| 2-3 | a 1.5 | d 0.2 | 14.6 | 14.2 | 12.1 | 5.3 | 68.9 | Example |
| 2-4 | a 1.5 | e 0.2 | 12.6 | 12.0 | 10.3 | 3.2 | 67.3 | Example |
| 2-5 | a 1.5 | f 0.2 | 8.7 | 6.4 | 3.2 | - | 65.2 | Example |
| 2-6 | a 1.5 | g 0.2 | 5.7 | 2.0 | - | - | 62.8 | Example |
| 2-7 | a 1.5 | h 0.2 | 15.2 | 13.0 | 9.1 | 1.3 | 69.7 | Example |
| 2-8 | a 1.5 | b 0.03 | 18.2 | 15.4 | 1.3 | - | 71.0 | Example |
| 2-9 | a 1.5 | b 0.05 | 18.6 | 16.5 | 8.2 | 1.5 | 71.3 | Example |
| 2-10 | a 1.5 | b 0.1 | 15.9 | 15.7 | 10.7 | 2.9 | 72.4 | Example |
| 1-9 | a 1.5 | b 0.2 | 18.4 | 18.3 | 16.2 | 6.0 | 71.7 | Example |
| 2-11 | a 1.5 | b 0.3 | 18.4 | 18.0 | 16.6 | 6.2 | 70.3 | Example |
| 2-12 | a 1.5 | b 0.5 | 17.3 | 17.0 | 15.7 | 7.2 | 69.4 | Example |
| 2-13 | a 1.5 | b 0.7 | 15.7 | 15.3 | 13.8 | 5.0 | 67.7 | Example |
| 2-14 | a 1.5 | b 1.0 | 13.9 | 15.4 | 13.0 | 4.1 | 60.3 | Example |

| | | | | | | | | |
|---|---|---|---|---|---|---|---|---|
| Bentonites and PVA are (parts) based on 100 parts of cement. | | | | | | | | |

From Table 2, when the kind and the addition amount of bentonites were constant based on 100 parts of cement and the kind and the addition amount of PVA were arbitrarily changed, the less the average degree of polymerization is, the less the aging change of slump is when the kind is changed, and when it is enlarged, the prevention effect of the slump loss is gradually lowered. In particular, when the average degree of polymerization exceeds 1700 and is 2000, or when it exceeds 2000, the prevention effect of the slump loss is greatly lost. Accordingly, the average degree of polymerization of PVA is 1700 or less and that of less are more preferable. Further, when PVA is a perfectly saponified article, the average degree of polymerization of 500 shows the retention property of slump equivalent to the partially saponified article of 1700 to 2000 (Experimental No.2-1 to No.2-7).

Further, when the addition amount is changed, the prevention effect of the slump loss is exhibited from 0.03 parts and it is also indicated that the more the addition amount is, the larger the effect is. However, it is indicated that strength tends to be gradually lowered, in particular, it is enlarged at 1.0 part and it is feared that strength is further lowered by addition more than 1. Consequently, the addition amount of PVA is 0.03 to 1 part and more preferably 0.05 to 0.7 parts (Experimental No.2-8 to No.2-14).

### Example 3

Using the concrete compounding of Example 1, operation was carried out in like manner as Example 1 except that 1.5 parts of the bentonite a and the PVA b shown in Table 3 based on 100 parts of cement were used. The result is described in Table 3.

### Materials used

Saccharides: sucrose and disaccharide

**Table 3**

| Experimental No. | PVA | Saccharides | Aging change of slump (cm) | | | | Compression strength (N/mm²) | Remarks |
|---|---|---|---|---|---|---|---|---|
| | | | Just after | 30 min | 60 min | 120 min | | |
| 3-1 | - 0.0 | 0.05 | 4.2 | 1.2 | - | - | 57.2 | Example |
| 1-9 | b 0.2 | 0.0 | 18.4 | 18.3 | 16.2 | 6.0 | 71.7 | Example |
| 3-2 | b 0.2 | 0.01 | 18.6 | 18.5 | 17.0 | 8.2 | 72.6 | Example |
| 3-3 | b 0.2 | 0.02 | 18.9 | 20.3 | 19.4 | 15.7 | 72.3 | Example |
| 3-4 | b 0.2 | 0.05 | 19.3 | 20.7 | 20.1 | 18.4 | 70.2 | Example |
| 3-5 | b 0.2 | 0.10 | 18.9 | 20.9 | 20.2 | 19.0 | 68.1 | Example |
| 3-6 | b 0.2 | 0.15 | 19.2 | 20.6 | 20.6 | 19.5 | 66.8 | Example |
| 3-7 | b 0.2 | 0.20 | 20.4 | 20.5 | 20.4 | 20.5 | 59.2 | Example |

| | | | | | | | | |
|---|---|---|---|---|---|---|---|---|
| PVA and saccharides are (parts) based on 100 parts of cement. | | | | | | | | |

From Table 3, when the kind and the addition amount of bentonites and PVA were constant based on 100 parts of cement and the addition amount of saccharides was changed, the prevention effect of the slump loss was confirmed from the amount of saccharides of 0.01 parts and it is indicated that the more the addition amount is, the larger the prevention effect of the slump loss is. However, when the addition amount is too much, strength comes to be lowered, the lowering is remarkable at 0.2 parts and it is deduced that strength is further lowered by the addition of more than it. Accordingly, it is indicated that the addition amount of saccharides is preferably 0.01 to 0.2 parts and more preferably 0.02 to 0.15 parts (Experimental No.3-2 to No.3-7).

Even if bentonites are not used in combination with PVA and only saccharides are added, the prevention effect of the slump loss is not exhibited (Experimental No.3-1).

### Example 4

Operation was carried out in like manner as Example 1 except that the concrete compounding of Example 1 was a base compounding, 1.5 parts of the bentonite a and 0.2 parts of the PVA b shown in Table 4 were used based on 100 parts of cement and a unit water amount shown in Table 4 and the polycarboxylate based water reducing agent based on 100 parts of cement were used. The result is described in Table 4.

### Materials used

Polycarboxylate based water reducing agent B: Trade name "DARLEXSUPER 1000N" series manufactured by Grace Chemicals Co., Ltd. For ultra high strength; liquid.

**Table 4**

| Experimental No. | Polycar-based water reducing agent | Polysaccharides | Water | Flow (cm) | Aging change of slump (cm) | | | | Compression strength (N/mm²) | Remarks |
|---|---|---|---|---|---|---|---|---|---|---|
| | | | | | Just after | 30 min | 60 min | 120 min | | |
| 4-1 | A 2.0 | 0.0 | 155 | 33.0 | 23.0 | 23.4 | 22.1 | 22.9 | 70.0 | Example |
| 4-2 | A 2.5 | 0.0 | 140 | 59.0 | 25.4 | 26.2 | 24.9 | 25.7 | 68.3 | Example |
| 4-3 | A 3.0 | 0.0 | 135 | 58.2 | 24.9 | 24.0 | 24.2 | 24.3 | 72.1 | Example |
| 4-4 | A 0.3 | 0.03 | 175 | - | 12.4 | 10.8 | 4.1 | - | 50.0 | Example |
| 4-5 | A 0.5 | 0.03 | 166 | - | 13.2 | 11.3 | 9.5 | 3.6 | 55.2 | Example |
| 4-6 | A 0.8 | 0.03 | 161 | - | 15.2 | 16.0 | 12.6 | 8.1 | 58.4 | Example |
| 4-7 | A 1.5 | 0.03 | 155 | - | 17.9 | 18.3 | 16.2 | 15.4 | 66.0 | Example |
| 4-8 | A 2.0 | 0.03 | 145 | - | 18.5 | 19.1 | 18.7 | 16.2 | 69.7 | Example |
| 4-9 | B 3.0 | 0.03 | 135 | 62.4 | 25.8 | 26.2 | 26.0 | 26.0 | 72.8 | Example |
| 4-10 | B 4.0 | 0.03 | 132 | 60.5 | 24.5 | 22.1 | 23.3 | 22.7 | 74.5 | Example |
| 4-11 | B 5.0 | 0.03 | 132 | 60.5 | 24.1 | 23.4 | 23.6 | 23.4 | 74.8 | Example |

| | | | | | | | | | | |
|---|---|---|---|---|---|---|---|---|---|---|
| Polycarboxylate-based water reducing agent and saccharides are (parts) based on 100 parts of cement. Water is a unit amount (kg/m²) | | | | | | | | | | |

From Table 4, when the kind and the addition amount of bentonites and PVA were constant based on 100 parts of cement and the kind and the addition amount of the polycarboxylate based water reducing agent were changed, the prevention effect of the slump loss was exhibited from the amount of the polycarboxylate based water reducing agent of 0.3 parts and it is indicated that the more the addition amount is, the larger the prevention effect of the slump loss is. The water reducing rate hits a peak at 4.0 to 5.0 parts. Accordingly, the addition amount of the polycarboxylate based water reducing agent is 0.3 to 5.0 parts and preferably 0.5 to 4.0 parts (Experimental No.4-4 to No.4-11).

Even if saccharides are not used in combination, it is indicated that slump is not changed for 120 minutes when the polycarboxylate based water reducing agent is much (Experimental No.4-1 to No.4-3). Self flowability is exhibited depending on the level of the slump (Experimental No.4-1 to No.4-3 and No.4-9 to No.4-11), and when saccharides are used in combination, it is indicated that flow for the slump value tends to be enlarged.

### Example 5

Operation was carried out in like manner as Example 1 except that the concrete compounding of Example 1 was a base compounding, a unit water amount shown in Table 5, 0.2 parts of the PVA b, 2.5 parts of the polycarboxylate based water reducing agent and bentonites shown in Table 5 were used based on 100 parts of cement. The result is described in Table 5.

**Table 5**

| Experimental No. | Bentonites | Water | Aging change of slump (cm) | | | | Compression strength (N/mm²) | Remarks |
|---|---|---|---|---|---|---|---|---|
| | | | Just after | 30 min | 60 min | 120 min | | |
| 5-1 | a 0.2, b 2 | 135 | 20.8 | 17.2 | 6.3 | 2.7 | 65.0 | Example |
| 5-2 | a 0.2, c 1 | 137 | 20.0 | 18.6 | 7.4 | 3.2 | 66.4 | Example |
| 5-3 | a 0.2, b 2, c 1 | 140 | 19.5 | 18.0 | 8.6 | 4.3 | 66.1 | Example |

| | | | | | | | | |
|---|---|---|---|---|---|---|---|---|
| Bentonites are (parts) based on 100 parts of cement. Water is a unit amount (kg/m²) | | | | | | | | |

From Table 5, it is indicated that even if 2 components or 3 components among bentonites are combined, the prevention effect of the slump loss is not obstructed.

### Example 6

Using a concrete compounding having a unit cement amount of 350 kg/m³, a unit fine aggregate amount of 883 kg/m³, a unit coarse aggregate amount of 980 kg/m³, a unit water amount of 140 kg/m³, a unit amount of the polycarboxylate based water reducing agent A of 7.0 kg/m³ (2.0 parts based on 100 parts of cement) and an air quantity of 4.5 ± 1.0%, performance was carried out in like manner as Example 1 except that when 1.5 parts of bentonites a, 0.2 parts of the PVA b, 0.03 parts of saccharides and a high strength admixture shown in Table 6 were compounded based on 100 parts of cement (Example) and when bentonites, PVA and saccharides were not compounded (Comparative Example), the aging change of slump and the compression strength with a material ages of 1 day, 7 days and 28 days cured in standard were measured. The result is described in Table 6.

### Materials used

High strength admixture a: Gypsums, natural anhydrous gypsum, Blaine's value = 5000 cm²/g.

High strength admixture β: Active silica, silica fume, BET specific surface area = 23 m²/g.

**Table 6**

| Experimental No. | Present cement admixture | High strength admixture | Aging change of slump (cm) | | | Compression strength (N/mm²) | | | Remarks |
|---|---|---|---|---|---|---|---|---|---|
| | | | Just after | 60 min | 120 min | 1 Day | 7 Days | 28 Days | |
| 6-1 | None | α 4.0 | * 21.2 | 3.6 | - | 22.8 | 56.8 | 67.1 | Comparative Example |
| 6-2 | Yes | - | 18.0 | 18.3 | 17.9 | 23.1 | 58.5 | 70.1 | Example |
| 6-3 | Yes | α 1.0 | 18.2 | 18.6 | 18.2 | 23.0 | 59.0 | 72.1 | Example |
| 6-4 | Yes | α 2.0 | 19.0 | 19.2 | 18.4 | 23.3 | 63.8 | 84.7 | Example |
| 6-5 | Yes | α 4.0 | 18.3 | 18.7 | 17.8 | 23.1 | 65.9 | 86.8 | Example |
| 6-6 | Yes | α 6.0 | 18.0 | 17.9 | 17.2 | 20.6 | 66.6 | 88.9 | Example |
| 6-7 | Yes | α 8.0 | 17.2 | 16.7 | 15.3 | 18.2 | 65.2 | 87.1 | Example |
| 6-8 | Yes | α 10.0 | 16.0 | 14.9 | 12.8 | 15.0 | 64.1 | 86.6 | Example |
| 6-9 | None | β 5.0 | * 21.7 | 5.4 | - | 25.8 | 59.3 | 78.9 | Comparative Example |
| 6-10 | Yes | β 2.0 | 18.0 | 18.1 | 17.3 | 24.2 | 60.5 | 80.2 | Example |
| 6-11 | Yes | β 5.0 | 16.3 | 16.1 | 15.8 | 24.9 | 68.4 | 89.9 | Example |
| 6-12 | Yes | β 10.0 | 16.0 | 15.3 | 14.7 | 25.8 | 70.4 | 94.6 | Example |
| 6-13 | Yes | β 15.0 | 15.5 | 13.8 | 12.7 | 27.1 | 73.8 | 97.7 | Example |
| 6-14 | Yes | β 20.0 | 15.0 | 13.2 | 11.9 | 28.1 | 74.4 | 98.3 | Example |
| 6-15 | Yes | β 25.0 | 13.9 | 12.6 | 10.3 | 30.1 | 75.6 | 99.0 | Example |
| 6-16 | Yes | α 2.0 | 16.8 | 16.9 | 16.3 | 26.2 | 73.2 | 108.7 | Example |
| | | β 5.0 | | | | | | | |

| | | | | | | | | | |
|---|---|---|---|---|---|---|---|---|---|
| High strength admixtures are (parts) based on 100 parts of cement. * Mark just after the aging change of slump is concrete which does not bleed but has a streak of separation. | | | | | | | | | |

From Table 6, even if the high strength admixture is used in combination, the prevention effect of the slump loss of the cement admixture of the present invention is not inhibited.

When the unit water amount is designed to be squeezed by increasing the amount of the polycarboxylate based water reducing agent with a little unit cement amount without using the cement admixture of the present invention, concrete that has a streak of separation is prepared even if the high strength admixture is added, but when the cement admixture of the present invention is used in combination, light and easily handled concrete is obtained and it is indicated that strength is also improved because the adhesive force of mortar with coarse aggregate is possibly enhanced (Experimental No.6-1 and No.6-5, Experimental No.6-9 and No.6-11).

When the high strength admixture is gypsum, it is indicated that the addition amount is preferably 10 parts or less from the viewpoint of strength, more preferably 1.0 to 8.0 parts and most preferably 2.0 to 6.0 parts (Experimental No.6-3 to No.6-8). It is indicated that when the high strength admixture is silica fume, the addition amount is also preferably 25 parts or less from the viewpoint of strength, more preferably 20 parts or less and most preferably 20 to 15 parts (Experimental No.6-10 to No.6-15).

Further, the combination use of both exhibits higher strength at a less addition amount and synergy effect is confirmed (Experimental No.6-16).

### INDUSTRIAL APPLICABILITY

The cement admixture of the present invention and the cement composition using the cement admixture can be used for general civil engineering and construction structures, concrete secondary products and the like.

## Claims

1. Use of a composition comprising bentonites and polyvinyl alcohol, wherein the polyvinyl alcohol has an average degree of polymerization of 1700 or less and a degree of saponification equal to or less than 95% by mol, as a cement admixture for concrete comprising a polycarboxylate based water reducing agent; wherein
the polycarboxylate based water reducing agent is present in an amount of 0.3 to 5 parts, the bentonites are present in an amount of 0.1 to 10 parts and the polyvinyl alcohol is present in an amount of 0.03 to 1 part based on 100 parts of the cement.

2. The use according to claim 1, wherein the bentonites are one or more selected from a group consisting of bentonite, acidic white clay and active white clay.

3. The use according to claim 1 or 2, wherein the cement admixture further comprises saccharides.

4. A cement composition comprising cement, a polycarboxylate based water reducing agent, bentonites and polyvinyl alcohol, wherein the polyvinyl alcohol has an average degree of polymerization of 1700 or less and a degree of saponification equal to or less than 95% by mol; and
the polycarboxylate based water reducing agent is present in an amount of 0.3 to 5 parts, the bentonites are present in an amount of 0.1 to 10 parts and the polyvinyl alcohol is present in an amount of 0.03 to 1 part based on 100 parts of the cement.

5. The cement composition according to claim 4, wherein the bentonites are one or more selected from a group consisting of bentonite, acidic white clay and active white clay.

6. The cement composition according to claim 4 or 5, further comprising saccharides.

7. The cement composition according to claim 6, wherein the saccharides are present in an amount of 0.01 to 0.2 parts based on 100 parts of the cement.

## Patentansprüche

1. Verwendung einer Zusammensetzung, umfassend Bentonite und Polyvinylalkohol, wobei der Polyvinylalkohol einen durchschnittlichen Polymerisationsgrad von 1700 oder weniger und einen Verseifungsgrad gleich 95 Mol% oder weniger aufweist, als ein Zementzusatzmittel für Beton, umfassend ein auf Polycarboxylat basierendes wasserreduzierendes Mittel; wobei
das auf Polycarboxylat basierende wasserreduzierende Mittel in einer Menge von 0,3 bis 5 Teilen vorliegt, die Bentonite in einer Menge von 0,1 bis 10 Teilen vorliegen und der Polyvinylalkohol in einer Menge von 0,03 bis 1 Teil vorliegt, bezogen auf 100 Teile des Zements.

2. Die Verwendung nach Anspruch 1, wobei die Bentonite ein oder mehrere sind, ausgewählt aus einer Gruppe bestehend aus Bentonit, saurem weißem Ton und aktivem weißem Ton.

3. Die Verwendung nach Anspruch 1 oder 2, wobei das Zementzusatzmittel außerdem Saccharide umfasst.

4. Eine Zementzusammensetzung, umfassend Zement, ein auf Polycarboxylat basierendes wasserreduzierendes Mittel, Bentonite und Polyvinylalkohol, wobei der Polyvinylalkohol einen durchschnittlichen Polymerisationsgrad von 1700 oder weniger und einen Verseifungsgrad gleich 95 Mol% oder weniger aufweist; und
das auf Polycarboxylat basierende wasserreduzierende Mittel in einer Menge von 0,3 bis 5 Teilen vorliegt, die Bentonite in einer Menge von 0,1 bis 10 Teilen vorliegen und der Polyvinylalkohol in einer Menge von 0,03 bis 1 Teil vorliegt, bezogen auf 100 Teile des Zements.

5. Die Zementzusammensetzung nach Anspruch 4, wobei die Bentonite ein oder mehrere sind, ausgewählt aus einer Gruppe bestehend aus Bentonit, saurem weißem Ton und aktivem weißem Ton.

6. Die Zementzusammensetzung nach Anspruch 4 oder 5, weiter umfassend Saccharide.

7. Die Zementzusammensetzung nach Anspruch 6, wobei die Saccharide in einer Menge von 0,01 bis 0,2 Teilen, bezogen auf 100 Teile des Zements, vorliegen.

## Revendications

1. Utilisation d'une composition comprenant des bentonites et un alcool polyvinylique, dans laquelle l'alcool polyvinylique a un degré moyen de polymérisation de 1700 ou moins et un degré de saponification égal ou inférieur à 95 % en mol, à titre d'adjuvant de ciment pour béton comprenant un agent de réduction de l'eau à base de polycarboxylate ; dans laquelle
l'agent de réduction aqueux à base de polycarboxylate est présent en une quantité de 0,3 à 5 parties, les bentonites sont présentes en une quantité de 0,1 à 10 parties et l'alcool polyvinylique est présent en une quantité de 0,03 à 1 partie pour 100 parties de ciment.

2. Utilisation selon la revendication 1, dans laquelle les bentonites sont une ou plusieurs bentonites choisies dans un groupe constitué par une bentonite, une argile blanche acide et une argile blanche active.

3. Utilisation selon la revendication 1 ou 2, dans laquelle l'adjuvant de ciment comprend en outre des saccharides.

4. Composition de ciment comprenant du ciment, un agent de réduction de l'eau à base de polycarboxylate, des bentonites et un alcool polyvinylique, dans laquelle l'alcool polyvinylique a un degré moyen de polymérisation de 1700 ou moins et un degré de saponification égal ou inférieur à 95 % en mol ; et
l'agent de réduction de l'eau à base de polycarboxylate est présent en une quantité de 0,3 à 5 parties, les bentonites sont présentes en une quantité de 0,1 à 10 parties et l'alcool polyvinylique est présent en une quantité de 0,03 à 1 partie pour 100 parties de ciment.

5. Composition de ciment selon la revendication 4, dans laquelle les bentonites sont une ou plusieurs bentonites choisies dans un groupe constitué par une bentonite, une argile blanche acide et une argile blanche active.

6. Composition de ciment selon la revendication 4 ou 5, comprenant en outre des saccharides.

7. Composition de ciment selon la revendication 6, dans laquelle les saccharides sont présents en une quantité de 0,01 à 0,2 partie pour 100 parties de ciment.
